# FASCICULE DE BREVET EUROPEEN

(11) **EP 2 870 535 B1**
(45) Date de publication et mention de la délivrance du brevet: **07.09.2016**
(21) Numéro de dépôt: 13732969.4
(22) Date de dépôt: 03.07.2013
(51) Int. Cl.: G06F 9/48

(54) **PROCEDE D'EXECUTION, AU SEIN D'UN SYSTEME EMBARQUE MULTITACHES, D'UNE APPLICATION CADENCEE PAR PLUSIEURS DOMAINES DE TEMPS DIFFERENTS INCLUANT UNE GESTION D'INTERRUPTIONS**
VERFAHREN ZUR AUSFÜHRUNG, IN EINEM BORDEIGENEN MULTITASKING-SYSTEM, EINER ANWENDUNG, DIE GEMÄSS EINER VIELZAHL VERSCHIEDENER ZEITDOMÄNEN, EINSCHLIESSLICH UNTERBRECHUNGSVERWALTUNG, ZEITGESTEUERT IST
METHOD FOR EXECUTING, WITHIN A MULTITASKING ONBOARD SYSTEM, AN APPLICATION TIMED ACCORDING TO A PLURALITY OF DIFFERENT TIME DOMAINS INCLUDING INTERRUPTION MANAGEMENT

(30) Priorité: 09.07.2012 FR 1256576
(43) Date de publication de la demande: 13.05.2015
(73) Titulaire: Commissariat à l'Énergie Atomique et aux Énergies Alternatives, 75015 Paris (FR)
(72) Inventeur: JAN, Mathieu, F-91600 Savigny-sur-Orge (FR); AUSSAGUES, Christophe, F-91400 Orsay (FR); DAVID, Vincent, F-91460 Marcoussis (FR)
(74) Mandataire: Hammes, Pierre
(86) Numéro de dépôt international: PCT/EP2013/063994
(87) Numéro de publication internationale: WO 2014/009213

(56) Documents cités:
- WO-A1-02/39277
- MATTHIEU LEMERRE ET AL: "Method and Tools for Mixed-Criticality Real-Time Applications within PharOS", OBJECT/COMPONENT/SERVICE-ORIENTED REAL-TIME DISTRIBUTED COMPUTING WORKSHOPS (ISORCW), 2011 14TH IEEE INTERNATIONAL SYMPOSIUM ON, IEEE, 28 mars 2011 (2011-03-28), pages 41-48, XP031943770, DOI: 10.1109/ISORCW.2011.15 ISBN: 978-1-4577-0303-4

## Description

La présente invention concerne le domaine des systèmes embarqués supportant des applications pour lesquelles le respect des contraintes temps réel de l'environnement et le respect des performances sont critiques. De tels systèmes communiquent avec des périphériques pour réaliser les entrées/sorties dont les instants des changements d'états doivent être pris en compte pour assurer une communication temps réel entre le système et son environnement physique. Pour faciliter la démonstration du respect des exigences de telles applications, ces systèmes embarqués temps-réel visent une exécution déterministe et sont en conséquence conçus à partir de méthodes de conception assurant la garantie par construction que les propriétés définies à la conception seront respectées dans les exécutables générés. L'utilisation d'une approche de programmation cadencée par le temps fait partie de ces techniques de conception.

Dans une approche de conception cadencée par le temps, la prise en charge des changements d'état d'un périphérique est généralement réalisée par le biais d'une méthode dite par polling ou méthode par sondage. Une telle méthode consiste à définir une tâche qui observe à intervalles temporels successifs, réguliers ou non, l'état d'un périphérique et réagit en conséquence en activant les traitements fonctionnels correspondants, par exemple, commander un actionneur en fonction des données reçues par le périphérique.

Par construction, dans une telle approche il existe un délai entre un changement d'état du périphérique et l'exécution de la tâche associée chargée d'observer ce changement. Par exemple pour une tâche périodique, ce délai est égal au mieux à une fois la période de la tâche. Pour pouvoir réduire ce délai et donc augmenter la réactivité du système, une approche par polling nécessite d'augmenter la fréquence d'activation de la tâche associée à la gestion de l'état d'un périphérique. Cela a pour conséquence d'augmenter la charge du processeur sur lequel est exécutée cette tâche, d'exécuter cette tâche à chacune de ses boucles d'activation sans garantie qu'un traitement fonctionnement utile soit exécuté et de surcharger le code applicatif de cette gestion par polling, le liant à l'implémentation système réalisée. De plus, lorsque plusieurs boucles de polling sont nécessaires dans la conception d'un système afin de gérer plusieurs périphériques, les problèmes de charge décrits précédemment sont accrus du fait de la multiplicité des contextes d'exécution nécessaires.

Une approche par polling induit donc un accroissement de la puissance du processeur nécessaire pour exécuter un système. Cet accroissement de la charge du processeur constitue le principal problème de l'utilisation de l'approche par polling au sein d'un système cadencé par le temps réel et constitue un frein à la réduction des coûts des systèmes mis en oeuvre avec cette approche.

On décrit à présent plus en détail les différents sous problèmes techniques, non résolus lorsque l'approche par polling est utilisée et visés par l'invention, ainsi que les limitations de l'art antérieur vis-à-vis de ces différents sous-problèmes.

Dans une approche cadencée par le temps, les contraintes temporelles des tâches à exécuter sont spécifiées lors de la conception des applications. Pour pouvoir spécifier ces contraintes temporelles par rapport à un temps physique, une possibilité est d'utiliser des instants inclus dans des horloges physiques. Ces horloges permettent de spécifier des dates d'activation et de terminaison ou échéances de tâches définissant ainsi le cadencement, c'est-à-dire une suite d'évènements décrits dans une base de temps physique. L'entrelacement de ces tâches peut se représenter sous la forme d'une suite d'intervalles temporels, la fin d'un intervalle temporel, et donc le début de l'intervalle suivant, correspondant à une date d'activation d'au moins une tâche.

Un système cadencé par le temps réel définit un unique domaine d'horloge appelé par la suite domaine d'horloge physique dont l'interruption source ou interruption dite de cadencement est générée par un composant matériel, tel un quartz, permettant de définir le temps physique du système temps réel. Un premier problème technique se pose lorsqu'on souhaite spécifier, dans le domaine d'horloge physique, le comportement temporel de tâches en fonction des changements d'état d'un périphérique. En effet, les changements d'état des périphériques sont asynchrones par rapport à des horloges physiques et il n'est donc pas possible de spécifier leur comportement temporel directement dans le domaine d'horloge physique c'est-à-dire en fonction de l'horloge interne du processeur principal. Ainsi, l'utilisation d'une approche par polling ne permet pas de spécifier le comportement temporel de tâche en fonction des changements d'état d'un périphérique. Un délai est toujours présent entre un changement d'état et une date d'activation de tâche.

Un ensemble de tâches cadencées par l'occurrence d'un évènement externe défini un domaine d'horloge asynchrone par rapport au temps physique, dont l'interruption source provient du périphérique liant le système au monde extérieur. Un tel domaine d'horloge asynchrone est appelé dans la suite de la description domaine d'horloge externe. A un instant donné, une tâche est affectée à un unique domaine d'horloge physique ou externe et un applicatif peut être constitué de plusieurs domaines d'horloges. L'existence de différents domaines d'horloge est présent par exemple dans les applicatifs de type asservissement de la vitesse variable d'une roue dentée (domaines d'horloge physique et externe angulaire, lié à la position de la roue dentée) ou de type capture de la valeur de signaux électriques (domaines d'horloge physique et externe d'échantillonnage, lié à la mesure de valeurs électriques) et guide la conception d'une partie de ces applicatifs.

On connait la publication "Method and Tools for Mixed-Criticality Real-Time Applications within PharOS de Matthieu Lemerre et al, 14th IEEE Int. Symposium on ISORCW, 28 March 2011 ". Elle décrit une approche classique de polling pour la gestion des changements d'états d'un périphérique. Cette approche introduit un délai entre l'évènement et sa prise en compte et ne prend pas en compte l'existence de différents domaines d'horloge.

On connait la demande de brevet internationale WO 2002/39277 qui permet uniquement la mise en oeuvre d'une approche dite par polling pour la gestion des changements d'état d'un périphérique, entrainant par construction la présence d'un délai entre l'évènement et sa prise en compte par le système. Par ailleurs, cette demande de brevet ne permet donc pas la conception et l'exécution d'applicatifs ayant le besoin d'intégrer des traitements dont le comportement temporel est spécifié selon différents domaines d'horloges incluant une gestion d'interruptions.

On connait également la demande de brevet américaine US 2004/0117685 qui concerne une méthode pour la prise en charge d'évènements asynchrones au sein d'un système cadencé par le temps réel. Cette méthode utilise un mécanisme de polling pour la gestion d'évènements asynchrones et traite ces évènements uniquement dans des intervalles temporels, périodiquement exécutés, qui peuvent être définis statiquement lors de la conception des applicatifs ou alloués à l'exécution si un évènement asynchrone est détecté. Toutefois, même dans ce dernier cas, la nouvelle allocation des intervalles temporels d'exécution n'est effective qu'à la fin de la période courante d'exécution. Les instants de changements d'état d'un périphérique ne sont donc pas utilisés pour spécifier des dates d'activations et d'échéances de tâches et un délai entre un changement d'état d'un périphérique et la détection de ce changement d'état est donc présent, induisant une charge processeur inutile comme déjà expliqué ci-dessus.

La publication « Arkadeb Ghosal and Thomas A. Henzinger and Christoph M. Kirsch and Marco A. A. Sanvido, Event-driven programming with logical execution times, Proc. of HSCC 2004, Lecture Notes in Computer Science » décrit également un système intégrant des évènements asynchrones dans une approche cadencée par le temps physique. L'activation de tâches peut être déclenchée sur de tels évènements asynchrones, mais la terminaison d'une tâche s'exprime toujours en temps physique. Par ailleurs, dans cette approche il existe toujours un délai entre l'apparition d'un évènement et sa prise en compte du fait de la nécessité d'attendre la terminaison des instances des tâches (périodiques) en cours d'exécution. Ainsi, le problème de spécifier le cadencement, c'est-à-dire à la fois l'activation et la terminaison de tâches sur la base d'évènements asynchrones par rapport au temps physique n'est pas résolu par ces travaux.

Un deuxième sous problème d'une approche par polling réside dans le manque de réactivité sur l'instant d'exécution réel des traitements liés à une interruption provenant d'un domaine d'horloge externe.

Si la fréquence d'activation d'une tâche n'est pas compatible avec le coût des changements de contexte d'exécution de cette tâche ou/et qu'il existe un besoin de réactivité sur l'instant d'exécution réel des traitements liés à évènement (sans notion d'échéance), une approche de type polling n'est pas possible. Un fonctionnement sous interruption est alors nécessaire, technique bien connue de l'Homme du métier, permettant de déclencher des traitements suite à l'occurrence d'une interruption.

La demande de brevet internationale du demandeur publiée sous le numéro WO 2002/39277 fourni une solution au problème précité par une maîtrise de l'entrelacement des tâches exécutées, mais ne reste toujours pas applicable si le coût de changement d'un ou de plusieurs contextes d'exécution n'est pas compatible avec la contrainte de réactivité vis-à-vis des traitements à exécuter.

L'état de la technique abonde sur l'utilisation de mécanismes qui permettent de basculer d'un fonctionnement par polling à un fonctionnement sous interruption en fonction de la charge du processeur mais ces différentes méthodes ne visent pas le domaine des systèmes temps réel. On connait, par exemple, la publication de Jeffrey C. Mogul and K. K. Ramakrishnan, " Eliminating Receive Livelock in an Interrupt-Driven Kernel ", ACM Transactions on Computer Systems, volume 15, number 3, pages 217-252, 1997.

Le procédé décrit dans la demande de brevet américaine US 2004/0117685 permet la production d'une réponse, suite à la détection d'un évènement asynchrone, à un instant précis mais pour cela s'appuie sur un matériel particulier permettant de retarder l'émission de la réponse. En effet, aucune garantie ne peut être fournie quant au fait que l'évènement asynchrone de réponse devra s'exécuter sans un intervalle temporel dédié à la gestion des évènements asynchrones. Par ailleurs, le procédé décrit est comparable à la notion connue de « polling server » et de « bandwith-preserving server » dans les systèmes temps réel, mais qui ne permet pas d'exécuter un traitement à un instant précis, uniquement de minimiser un délai entre l'apparition d'un évènement et l'exécution du code fonctionnel lié à cet évènement.

Un troisième sous-problème visé par l'invention concerne la communication entre différentes tâches qui sont cadencées selon des domaines d'horloges différents.

Un applicatif peut être constitué de tâches appartenant à différents domaines d'horloge et une tâche d'un domaine peut vouloir communiquer avec une tâche d'un autre domaine et/ou attendre un évènement éventuellement hors de son domaine d'horloge. De tels évènements incluent notamment :
- des événements associés à des instants exprimés à l'aide d'autres domaines d'horloge, par exemple un instant exprimé en horloge angulaire pour une tâche dont l'horloge est en temps réel, ou inversement un instant en temps réel pour une tâche dont l'horloge est en temps angulaire. Par exemple, il peut s'agir de l'envoi de données par une tâche vers un autre domaine d'horloge, ou pour une tâche d'un domaine d'horloge physique, de l'occurrence de la prochaine interruption d'un domaine d'horloge externe;
- des évènements asynchrones, par exemple l'arrivée d'une interruption déclenchée par l'activation d'une commande d'un clignotant par le conducteur d'une voiture, même si ces évènements ne sont associés à aucune horloge d'un domaine d'horloge;

La présente invention propose un procédé permettant de concevoir un applicatif cadencé par plusieurs domaines d'horloges (physique et/ou externe) et intégrant par domaine des traitements par interruptions au sein d'un système temps-réel. En particulier, l'invention permet l'échange de données et la synchronisation entre les traitements cadencés dans différents domaines d'horloge, tout en conservant l'exécution de systèmes temps réel multi-tâches déterministes ou quasi-déterministes. Le terme déterministe est associé ici à un comportement reproductible du système qui ne soit pas sensible aux aléas des temps d'exécution ni au fonctionnement propre des ordonnanceurs. On parle d'exécution quasi-déterministe du fait des dérives, potentiellement différentes d'une exécution à l'autre, entre les différents domaines d'horloges gérés par un même processeur. Lorsqu'un unique domaine d'horloge est utilisé, l'exécution est alors déterministe.

Plus précisément, une exécution quasi-déterministe signifie, dans le contexte de l'invention, une exécution déterministe au sein de chaque domaine d'horloge pris séparément pour laquelle les pires comportements temporels et les dimensionnements de la charge de calcul associés sont prédictibles et bornés au sein de chaque domaine d'horloge, les dimensionnements des tampons pour l'implémentation des communications inter et intra domaines d'horloge sont prédictibles et bornés et enfin les données observées d'un domaine d'horloge depuis un autre domaine d'horloge sont cohérentes entre elles. Plus précisément, une donnée d'un premier domaine, observable par une première tâche d'un second domaine, sera également observable par toute autre tâche du second domaine dont la date d'activation est égale ou supérieure à la date d'activation de la première tâche (du second domaine). Une donnée d'un premier domaine, non observable par une première tâche du second domaine, sera également non observable par toute autre tâche du second domaine dont la date d'activation est antérieure à la date d'activation de la première tâche (du second domaine).

Pour obtenir cette propriété de quasi-déterminisme, le procédé selon l'invention s'appuie sur les occurrences des interruptions autorisées du système pour au final, soit mettre à jour les listes d'ordonnancement et ainsi permettre la spécification du comportement temporel de tâches en fonction des changements d'état d'un périphérique, soit exécuter immédiatement une première partie d'un traitement fonctionnel afin de répondre à des contraintes de réactivité associées à ces traitements, la seconde partie du traitement fonctionnel pouvant être exécuter ultérieurement.

Par ailleurs, tout écart à l'exécution par rapport aux hypothèses faites, par domaine, vis-à-vis du dimensionnement de la charge de calcul est détecté par le présent procédé via la vérification que les occurrences des évènements cadençant les domaines est conforme au comportement attendu (et pris comme hypothèse pour réaliser le dimensionnement de la charge de calcul) et le respect des contraintes d'occurrence sur un intervalle pour les interruptions déclenchant l'exécution de traitements.

Enfin, la prise en compte des différences de rythmes entre les tâches productrices de données et les tâches consommatrices de données permet de dimensionner les tampons utilisés pour l'implémentation de communication intra-domaine. La conversion de dates entre domaines permet d'obtenir cette capacité pour les communications inter-domaines.

Il est à noter également que lorsque l'application ne nécessite qu'un seul domaine d'horloge, son exécution à l'aide du procédé selon l'invention peut être rendue déterministe car la problématique liée aux dérives d'horloges entre domaines distincts n'existe plus.

L'invention a pour objet un procédé d'exécution, déterministe ou quasi-déterministe, d'une application au sein d'un système multitâches, caractérisé en ce que ladite application est composée d'au moins une tâche dont le cadencement temporel est spécifié dans un premier référentiel temporel asynchrone par rapport au temps physique, appelé premier domaine d'horloge externe, défini par une horloge de base synchrone avec des changements d'état d'un périphérique dudit système, ledit procédé comportant au moins les étapes suivantes exécutées par ledit système à la réception d'une occurrence d'une interruption :
- Contrôler si l'interruption reçue est autorisée par le système,
- Horodater l'interruption reçue,
- Vérifier que l'instant d'occurrence de l'interruption est conforme aux contraintes d'occurrence spécifiées et si cela n'est pas le cas, en informer l'application,
- Si l'interruption reçue est synchrone avec l'horloge de base dudit premier domaine d'horloge externe, autrement dit s'il s'agit d'une interruption source du premier domaine d'horloge externe :
   - Incrémenter un compteur d'occurrences des interruptions reçues, la valeur courante dudit compteur d'occurrences correspondant au temps courant dans le domaine d'horloge externe,
   - Identifier les tâches en cours d'exécution dont l'échéance est égale à la valeur courante du compteur d'occurrences des interruptions reçues, signifiant une violation d'échéance,
   - Transférer les tâches dont la date d'activation est égale à la valeur courante du compteur d'occurrences des interruptions reçues, de la liste des tâches au repos vers la liste des tâches prêtes pour une exécution sur ledit système,
   - Si ledit système multitâches comporte au moins un traitement par interruptions et que l'interruption reçue est soit asynchrone avec l'horloge de base dudit premier domaine d'horloge externe, soit asynchrone avec les interruptions source d'un domaine d'horloge physique, sur réception de ladite interruption asynchrone, marquer (309) la phase de traitement de l'interruption reçue comme exécutable et rendre visibles les données nécessaires pour ladite application au sein dudit premier domaine d'horloge externe,
- Acquitter l'interruption reçue et autoriser la réception de nouvelles interruptions.

Les contraintes spécifiées sur l'occurrence de l'interruption peuvent être un instant attendu, en temps physique, d'occurrence de l'interruption et un intervalle de tolérance sur cet instant.

Selon un aspect particulier de l'invention, l'intervalle de tolérance est fixe ou est fonction d'une variable dont la sémantique est liée à l'application.

Selon un autre aspect particulier de l'invention, l'étape de vérification des contraintes spécifiées sur l'occurrence d'une interruption source du domaine d'horloge comporte au moins les sous-étapes suivantes :
- Vérifier que l'interruption n'est pas reçue avant la borne inférieure de l'intervalle de tolérance,
- Vérifier qu'une interruption est reçue après la borne inférieure de l'intervalle de tolérance et avant la borne supérieure de l'intervalle de tolérance.

Selon un mode de réalisation particulier, le procédé selon l'invention comporte en outre une étape d'extraction des données fournies par un périphérique dont un changement d'état a déclenché l'interruption.

Les contraintes spécifiées sur l'occurrence de l'interruption peuvent être un nombre d'interruptions autorisées sur un intervalle temporel de durée donnée.

Dans une variante de réalisation de l'invention, le procédé selon l'invention comporte en outre l'étape suivante : lorsqu'une tâche consommatrice cadencée selon un premier domaine d'horloge souhaite consulter des données produites par une tâche productrice cadencée selon un second domaine d'horloge distinct du premier domaine d'horloge, convertir la date d'activation de ladite tâche consommatrice dans le second domaine d'horloge de la tâche productrice, de sorte à en déduire les données consultables par la tâche consommatrice qui sont celles dont la date de visibilité est inférieure ou égale à cette date d'activation convertie.

Dans une variante de réalisation de l'invention, le procédé selon l'invention comporte en outre une étape de synchronisation d'une tâche sur un vènement cadencé selon un deuxième domaine d'horloge différent dudit premier domaine d'horloge externe, l'étape de synchronisation consistant au moins à :
- Signaler que la tâche souhaite attendre l'occurrence dudit évènement pour poursuivre son exécution,
- Lorsque cet évènement survient, poursuivre l'exécution de la tâche soit au sein dudit premier domaine d'horloge externe, soit en changeant le cadencement de cette tâche dudit premier domaine d'horloge externe vers ledit deuxième domaine d'horloge.

L'invention a également pour objet un programme d'ordinateur comportant des instructions pour l'exécution du procédé de gestion d'interruptions selon l'invention, lorsque le programme est exécuté par un processeur ainsi qu'un support d'enregistrement lisible par un processeur sur lequel est enregistré un programme comportant des instructions pour l'exécution du procédé selon l'invention.

D'autres caractéristiques et avantages de la présente invention apparaîtront mieux à la lecture de la description qui suit en relation aux dessins annexés qui représentent :
- la figure 1, un schéma d'un exemple de système apte à mettre en oeuvre le procédé selon l'invention,
- la figure 2, un diagramme illustrant la séquence d'exécution ou le cadencement de tâches temps réel appartenant à deux domaines d'horloges différents,
- la figure 3, un organigramme illustrant les étapes du procédé selon l'invention,
- la figure 4, un diagramme illustrant les traitements mis en oeuvre, dans un mode de réalisation particulier du procédé selon l'invention, suite à la réception d'une interruption hors d'un domaine d'horloge,
- la figure 5, un diagramme illustrant le déclenchement d'une interruption à un instant futur, selon un mode de réalisation particulier de l'invention,
- la figure 6, un diagramme illustrant, sur un exemple, la mise en oeuvre du procédé selon l'invention.

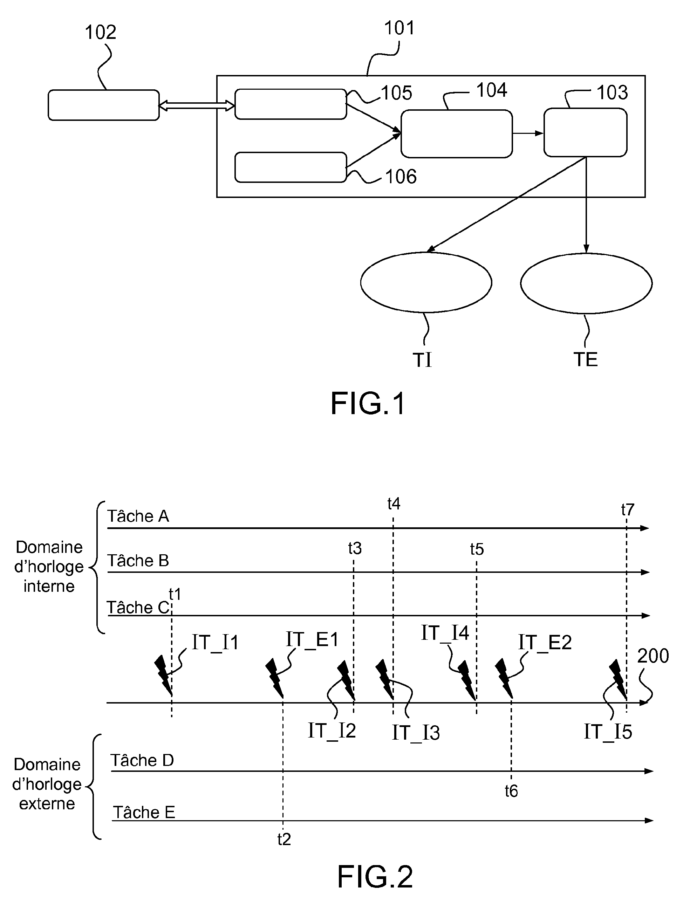

La figure 1 schématise un exemple de système 101 temps-réel exécutant différentes tâches, les tâches exécutées appartenant à des domaines d'horloge différents.

Le système 101, par exemple un système embarqué, comprend au moins un processeur 103 apte à exécuter au moins une tâche appartenant à une application et un contrôleur d'interruptions 104 chargé de la gestion des signaux d'interruptions provenant d'une part d'un composant d'horloge 106 interne au système 101 et d'autre part d'un périphérique 105, par exemple un bus de données , qui sert d'interface entre le système 101 et un composant externe 102 communiquant avec ledit système 101. Le périphérique 105 réalise, par exemple, l'échantillonnage des données transmises par le composant externe 102 au système 101. Un autre exemple de périphérique 105 est par exemple un capteur qui détecte la présence d'une pièce mécanique, constituant le composant externe 102, et qui informe le système 101 de cette détection.

Le processeur 103 exécute un premier ensemble de tâches TI cadencées selon un domaine d'horloge physique, c'est-à-dire dont la séquence est synchrone de l'horloge fournie par le composant 106 ou d'un multiple de cette horloge. Ce domaine d'horloge physique correspond à une approche cadencée par le temps. Le processeur 103 exécute également un second ensemble de tâches TE cadencées selon un domaine d'horloge externe, c'est-à-dire dont la séquence est synchrone des interruptions issues du périphérique 105, générées suite à des échanges avec le composant externe 102 communiquant avec le système 101.

Le contrôleur d'interruptions 104 réalise un arbitrage des interruptions reçues en fonction de leurs niveaux de priorité. Il permet de rendre visible les interruptions pour le processeur 103 qui exécute le procédé de gestion d'interruptions au sein d'une approche cadencée par le temps tel qu'il sera développé dans la suite de la description.

La figure 2 illustre sur un diagramme un exemple de séquence des tâches exécutées sur le processeur 103 en fonction de leur appartenance à un domaine d'horloge physique ou externe.

Sur la figure 2, le premier ensemble de tâches TI cadencées par le domaine d'horloge physique est constitué des tâches A, B et C. Le second ensemble de tâches TE cadencées selon le domaine d'horloge externe, lié au périphérique 102, est constitué des tâches D et E.

Sur l'axe temporel 200 sont représentés les instants d'occurrence des interruptions reçues par le contrôleur d'interruptions 104. On dissocie deux types d'interruptions. Les interruptions IT_I1, IT_I2, IT_I3 et IT_I4 sont issues du composant d'horloge 106 interne au système 101 et sont donc associées au domaine d'horloge physique. Les interruptions IT_E1 et IT_E2 sont issues du bus de données 105 et sont associées au domaine d'horloge externe lié au périphérique 102.

La figure 2 représente à titre illustratif, un exemple de séquence possible des différentes tâches. A l'instant t1, suite à la réception de l'interruption IT_I1 par le contrôleur d'interruptions 104, la tâche C passe de la liste des tâches au repos à la liste des tâches prêtes à être exécutées sur le processeur 103. A l'instant t2, suite à la réception de l'interruption IT_E1 par le contrôleur d'interruptions 104, les tâches D et E passent de la liste des tâches au repos à la liste des tâches prêtes à être exécutées sur le processeur 103 du système 101. A l'instant t6, si l'instance de la tâche D activée à l'instant t2 est en cours d'exécution, une violation d'échéance pour cette tâche D est détectée.

On décrit à présent plus en détail le procédé de gestion d'interruptions selon l'invention exécuté par le processeur 103 pour assurer une exécution déterministe ou quasi-déterministe de traitements temps-réel.

Dans une étape préalable, une horloge de base permettant de définir un domaine d'horloge externe est spécifiée. Cette horloge de base décrit les changements d'état d'un périphérique définissant le domaine d'horloge externe considéré. Une horloge de base distincte est associée à chacun des périphériques gérés et autant de domaines d'horloge externes que de périphériques peuvent être définis dans l'absolu. Dans l'exemple des figures 1 et 2, l'horloge de base correspond à l'horloge associée à la génération des occurrences IT_E1 et IT_E2 du signal d'interruption produit par le périphérique 105. La définition de cette horloge de base est constituée au moins de deux éléments : une identification de l'interruption source (dont IT_E1 et IT_E2 représentent des occurrences) utilisée par le périphérique d'entrée/sortie et la description du comportement temporel attendu des occurrences de changement d'état du périphérique via par exemple l'utilisation d'horloges 106 du domaine d'horloge physique, c'est-à-dire en temps physique.

Un exemple d'horloge de base est par exemple une interruption générée par un composant de type contrôleur de bus, constituant le périphérique 105 du système 101, et communiquant avec un circuit intégré, constituant le composant externe 102. Ce circuit intégré est en charge de mesurer les valeurs de signaux électriques puis de transmettre une par une les valeurs obtenues, également appelés échantillons, via le bus de données reliant le circuit intégré et le contrôleur de bus. Lors de l'initialisation du système, le contrôleur de bus est configuré pour déclencher la génération d'une interruption lorsqu'un échantillon est reçu. Ces occurrences d'interruptions définissent une horloge de base d'un domaine d'horloge synchrone sur la production d'échantillons de mesures électriques.

Un autre exemple d'horloge est par exemple une interruption générée par un composant de type timer, constituant le périphérique 105 du système 101, et communiquant avec un capteur matériel, constituant le composant externe 102. Ce capteur matériel est en charge de détecter l'apparition d'une dent sur une roue dentée et de transmettre un signal indiquant une telle détection au composant timer. Lors de l'initialisation du système, le composant timer est configuré pour déclencher la génération d'une interruption lorsque le signal indiquant la détection d'une dent est reçu. Ces occurrences d'interruptions définissent une horloge de base d'un domaine d'horloge synchrone sur la détection de dents sur une roue dentée, c'est-à-dire synchronisé sur la vitesse de la roue.

Des horloges supplémentaires aptes à générer un signal d'horloge d'une périodicité multiple du signal produit par l'horloge de base peuvent également être définies en plus de l'horloge de base. Autrement dit une horloge supplémentaire consiste en un sous-ensemble de l'horloge de base, c'est-à-dire que les occurrences d'une horloge supplémentaire sont prises parmi les occurrences de l'horloge de base.

De manière optionnelle, une tolérance autorisée par rapport au comportement temporel attendu des changements d'état du périphérique peut être spécifiée. Plus précisément, la spécification de cette tolérance peut être réalisée par la fourniture d'un écart temporel autorisé sur l'instant précis attendu du changement d'état d'un périphérique. Autrement dit, cet écart temporel est spécifié par une tolérance minimale tₘᵢₙ (pire cas du rythme entre deux occurrences de l'interruption) et une tolérance maximale tₘₐₓ tel que le changement d'état du périphérique attendu à l'instant T peut intervenir dans l'intervalle temporel [T- tₘᵢₙ, T + tₘₐₓ].

Plus généralement, la tolérance peut être fournie sous la forme d'un ensemble d'intervalles d'une variable dont la sémantique est liée au système applicatif conçu à l'aide du procédé selon l'invention, dans lesquels au minimum le pire cas (de l'intervalle temporel de tolérance) du rythme d'occurrence d'une interruption provenant d'un périphérique est spécifié. Par exemple, dans le cas d'un système d'asservissement de la vitesse variable d'une roue dentée, l'instant précis d'un changement d'état d'un périphérique peut être variable en fonction de la vitesse de la roue. Dans ce cas, le comportement temporel des changements d'état du périphérique est défini en faisant correspondre à un intervalle de variation de la vitesse de la roue [V₁ V₂], la valeur pire cas de l'instant précis du changement d'état, c'est-à dire la valeur la plus petite. Ainsi, l'horloge de base peut être définie de façon dynamique en fonction d'une valeur spécifique au système applicatif mis en oeuvre.

Un graphe du comportement temporel de l'horloge de base ainsi décrite peut être extrait depuis cette spécification. Un exemple est un comportement périodique, spécifiable via une unique horloge.

A partir de l'horloge de base spécifiée, et des éventuelles horloges supplémentaires, le cadencement temporel des tâches à exécuter en fonction des changements d'état du périphérique peut être spécifié dans le domaine d'horloge externe ainsi défini.

### Gestion d'une interruption reçue

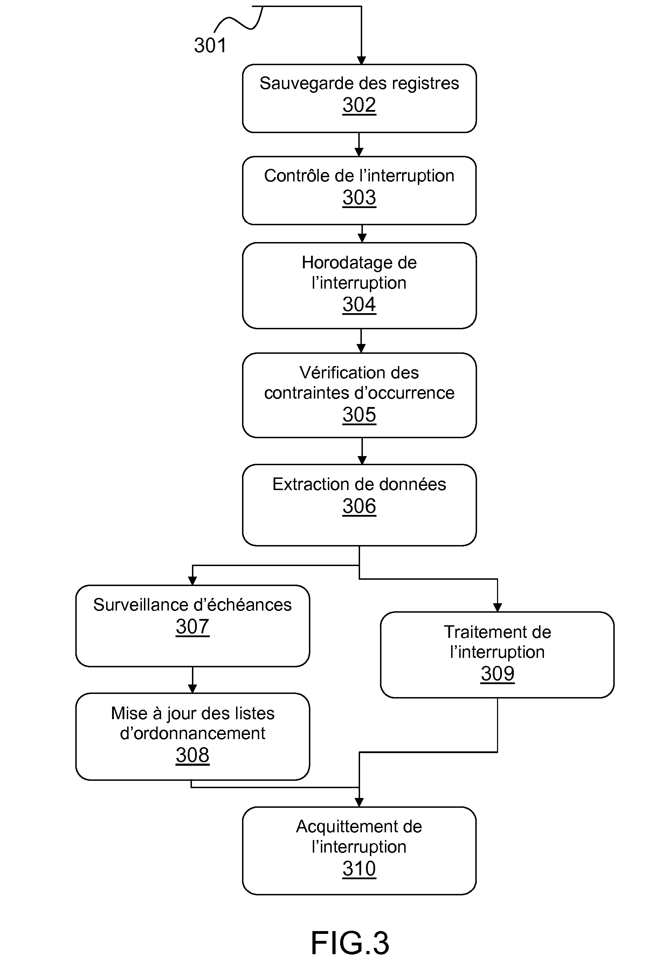

La figure 3 illustre, sur un organigramme, les étapes de mise en oeuvre du procédé selon l'invention, réalisées à l'occurrence d'une interruption.

Le terme interruption désigne l'évènement associé à la transmission d'un signal d'interruption depuis un périphérique vers le processeur 103, arbitré par le contrôleur d'interruptions 104. Les occurrences des interruptions reçues peuvent définir soit un domaine d'horloge physique du système, lorsqu'elles proviennent d'un composant d'horloge 106 interne au système, soit un domaine d'horloge externe, lorsqu'elles proviennent d'un périphérique 105 du système 101.

On distingue dans la suite de la description deux types d'interruptions. On appelle interruption source d'un domaine d'horloge ou interruption de cadencement, l'interruption décrite par l'horloge de base spécifiée dans l'étape préalable du procédé pour ce domaine d'horloge. On appelle interruption hors domaine d'horloge, toute autre interruption qui peut être liée à un évènement non synchrone de l'horloge de base d'un domaine d'horloge.

Sur réception 301 d'une interruption, source d'un domaine d'horloge ou hors domaine d'horloge, dans une première étape 302, si l'architecture matérielle du système 101 le nécessite, les registres matériels utilisés pour identifier une interruption précédemment reçue sont sauvegardés. Ces registres sont notamment utilisés pour réaliser un horodatage des interruptions reçues ainsi qu'un contrôle de l'occurrence de ces interruptions en fonction de la spécification préalable de leur comportement temporel attendu. En fonction, du niveau d'exécution du processeur 103 choisi pour exécuter le présent procédé, le processeur peut offrir des registres dupliqués ou partagés permettant de réduire, voire d'éliminer, les sauvegardes nécessaires à mettre en oeuvre si un traitement était en cours d'exécution au moment où l'interruption est reçue.

Dans une deuxième étape 303, un contrôle est réalisé pour vérifier que l'interruption reçue 301 est une interruption autorisée par le système.

Dans une troisième étape 304, un horodatage de l'évènement associé à l'interruption est réalisé. Cette étape 304 peut être réalisée à l'aide d'un mécanisme de datation d'évènement si le périphérique source de l'interruption reçue offre un tel mécanisme. A titre d'exemple, un tel mécanisme de datation est mis en oeuvre par un contrôleur réseau implémentant le standard IEEE 1588. Dans le cas d'une mise en oeuvre sans support matériel de datation, l'horodatage de l'évènement doit immédiatement suivre les étapes précédentes sans que d'autres interruptions n'interfèrent avec ces actions systèmes.

Dans une quatrième étape 305, une vérification des contraintes d'occurrence de l'interruption reçue est réalisée. Si une contrainte n'est pas respectée, l'interruption reçue est désactivée et l'information est remontée au niveau applicatif. La contrainte d'occurrence à respecter dépend du type d'interruption reçue selon qu'il s'agit d'une interruption source d'un domaine d'horloge ou d'une interruption hors domaine d'horloge.

Les interruptions source d'un domaine d'horloge suivent un comportement temporel défini dans la spécification réalisée dans l'étape préalable du procédé selon l'invention et qui sert de point d'entrée.

La vérification des contraintes d'occurrence d'une interruption source d'un domaine d'horloge est réalisée par exemple, en utilisant le mode comparaison de valeurs, bien connu de l'Homme du métier, du compteur matériel utilisé pour implémenter l'heure courante du domaine d'horloge physique. Dans un tel mode de comparaison de valeurs, un compteur matériel positionne un indicateur et éventuellement déclenche une interruption si la valeur de comparaison a été atteinte. Les valeurs comparées dans le procédé correspondent aux bornes inférieure et supérieure de l'intervalle de temps spécifié pour l'occurrence d'une interruption, permettant ainsi de surveiller la tolérance minimale et la tolérance maximale pour chaque évènement. Les valeurs de comparaison à positionner sont calculées par addition de la tolérance attendue sur le comportement temporel du périphérique à la valeur courante du compteur matériel utilisé pour implémenter l'heure courante du domaine d'horloge physique.

Pour surveiller la tolérance minimale, le mode de comparaison utilisé est configuré pour uniquement positionner un indicateur, prenant la forme d'un bit, lorsque la valeur attendue est atteinte. Lors de la quatrième étape 305, le positionnement de cet indicateur de surveillance de la tolérance minimale est vérifié. Si cet indicateur n'est pas positionné, cela signifie que l'occurrence reçue de l'interruption de cadencement est reçue avant la borne inférieure de l'intervalle de tolérance. Le système enregistre cette information qui est transmise à l'applicatif lors de la cinquième étape 306 du procédé, décrite par la suite.

De même, pour surveiller la tolérance maximale, le mode de comparaison utilisé est configuré pour déclencher une interruption lorsque le compteur matériel atteint la borne supérieure de l'intervalle temporel spécifié. Si une telle interruption (ne correspondant pas à l'interruption source du domaine surveillé) est générée, cela signifie qu'aucune interruption n'a été reçue pendant cet intervalle et que donc le comportement du système n'est pas conforme aux hypothèses de la spécification. Dans un tel cas et suite à la réception de cette interruption, la cinquième étape 306 du procédé est exécutée afin d'informer au plus tôt l'applicatif du non respect du comportement temporel attendu. De cette façon, l'exécution des traitements en temps réel est sécurisée.

Dans cette possible implémentation, le nombre d'interruptions source de domaine d'horloge qui sont contrôlables est fonction du nombre de registres de comparaison associés au compteur utilisé et du nombre de compteurs disponible sur le matériel utilisé pour réaliser le système.

Lorsque l'interruption reçue est une interruption hors domaine d'horloge, les contraintes d'occurrences à vérifier concernent essentiellement le nombre d'interruptions autorisées sur une fenêtre temporelle glissante de durée donnée. Au sein d'un domaine d'horloge, les différentes interruptions autorisées, autre que les interruptions sources du domaine d'horloge, peuvent être spécifiées par intervalles temporels spécifiques. Dans chaque intervalle temporel, un type d'interruptions est autorisé avec un nombre maximum d'occurrences. Dans certains intervalles temporels, aucune interruption n'est autorisée. Cette autorisation des interruptions par intervalles temporels permet d'intégrer l'impact des interruptions aux calculs d'ordonnancement du domaine d'horloge considéré.

Dans une cinquième étape 306, les données applicatives fournies par le périphérique et associées à l'interruption peuvent être extraites et stockées à un emplacement mémoire prédéfini via l'appel d'un code applicatif.

Cette fonction applicative permet aux concepteurs d'applications d'implémenter un protocole applicatif spécifique utilisé pour la mise en oeuvre de la gestion du périphérique. Dans le cas où l'interruption reçue est une interruption source d'un domaine d'horloge, le code applicatif est appelé que l'interruption soit dans l'intervalle de tolérance de son comportement temporel attendu ou non. En fonction des performances d'exécution sur la cible matérielle utilisée par le système, un changement de droit mémoire est possible permettant d'exécuter les fonctions applicatives en mode utilisateur avec les droits mémoire uniquement nécessaire pour cette exécution. Cette fonction applicative dispose des informations relatives suivantes :
- si une occurrence de l'interruption source du domaine d'horloge a eu lieu ou si le comportement temporel attendu n'a pas été respecté,
- la durée en temps entre deux occurrences de changements d'état. Cette fonction permet d'implémenter des alternatives à l'arrêt du système en produisant des valeurs prédéfinies dont la sémantique est connue des tâches du domaine d'horloge. Par exemple, dans le cas d'une application chargée de détecter l'apparition d'une dent sur une roue dentée la valeur prédéfinie peut être un identifiant de la dent associée à l'interruption source du domaine d'horloge sur laquelle le procédé selon l'invention est initié. A partir de cette information, le procédé peut synchroniser le démarrage de l'exécution d'une tâche non pas sur la première interruption source du domaine d'horloge reçue mais sur une interruption source associée à un identifiant de dent particulier. Cette fonction applicative permet ainsi de synchroniser le démarrage d'un domaine sur le calcul d'un point particulier dans le système. Elle peut également permettre d'informer le système de l'arrêt d'une ou plusieurs tâches ou du transfert d'une tâche vers un autre domaine d'horloge.

Dans le cas où l'interruption reçue est une interruption hors domaine d'horloge, le code applicatif exécuté a pour fonction unique d'extraire les données associées à l'interruption.

Dans un mode de réalisation particulier de cette étape, un procédé d'accès direct à la mémoire ou DMA (Direct Memory Access) peut être utilisé pour décharger le processeur des opérations de gestion de la mémoire. Dans le cas d'utilisation d'un procédé DMA, un contrôleur peut être utilisé pour transférer directement les données circulant de ou vers le périphérique considéré vers la mémoire principale du système et ce sans intervention du processeur. Dans ce cas, l'interruption reçue peut être une interruption générée par ce contrôleur qui signifie la fin des transferts de données entre le périphérique et le système.

Lorsque l'interruption reçue est une interruption source d'un domaine d'horloge, le procédé selon l'invention se poursuit par l'exécution d'une sixième étape 307 de surveillance d'échéances et d'une septième étape 308 de mise à jour des listes d'ordonnancement.

Plus précisément, l'étape 307 consiste à surveiller les échéances des tâches en cours d'exécution au moment où une interruption source d'un domaine d'horloge survient. Un compteur d'occurrences des interruptions source est incrémenté à chaque interruption source reçue. La valeur courante de ce compteur correspond au temps courant dans le domaine d'horloge considéré. Les dates d'échéance de tâches sont comparées au compteur d'occurrences, ce qui permet de surveiller que l'exécution est conforme aux spécifications de chaque tâche. Si une tâche dont la date d'échéance est supérieure à la valeur courante du compteur d'occurrences est en cours d'exécution, une violation d'échéance est identifiée.

L'étape 308 consiste à mettre à jour la liste des tâches prêtes pour une exécution par le système selon la politique d'ordonnancement implémentée. La valeur courante du compteur d'occurrences des interruptions source est comparée aux dates d'activation des tâches de la liste en attente d'exécution, dès que cette valeur atteint celle d'une date d'activation, la tâche correspondante est ajoutée à la liste des tâches prêtes pour une exécution.

Lorsque l'interruption reçue est une interruption hors domaine d'horloge, le procédé selon l'invention se poursuit par l'exécution d'une huitième étape 309 qui consiste à marquer comme exécutable une phase de traitement de l'interruption reçue puis à parcourir la liste contenant les phases de traitement en attente pour les insérer dans la liste des phases de traitement à exécuter par ordre de priorité décroissante et enfin à exécuter en séquence les différents éléments de cette liste. Le cas de réception d'une interruption hors domaine d'horloge correspond à l'exécution, par le processeur, de traitements sous interruptions et non de tâches comme cela est le cas pour la réception d'interruptions source du domaine d'horloge. Une phase de traitement a pour rôle de rendre visibles des données pour les tâches exécutées au sein d'un domaine d'horloge auquel est fonctionnellement associé un traitement par interruption. Les données proviennent du périphérique associé à l'interruption et peuvent être éventuellement transformées via la phase de traitement.

Dans le cas d'interruptions hors domaine d'horloge, les traitements mis en oeuvre sont séparés en une phase d'acquisition de l'interruption qui a été décrite ci-dessus et qui regroupe l'ensemble des étapes 302 à 306 suivie d'une ou plusieurs phases de traitement des données associées à l'interruption, par exemple des données transmises par un périphérique externe. Une phase de traitement peut être divisible en sous-phases. Les phases de traitement des données issues d'interruptions sont enchainées et à chaque transition vers une autre phase de traitement ou chaque reprise d'une phase de traitement des données la liste des phases de traitements en attente d'exécution est triée par priorité décroissante. Une phase de traitement peut être interrompue par une nouvelle phase d'acquisition suite à la réception d'une nouvelle occurrence d'une interruption hors domaine d'horloge autorisée.

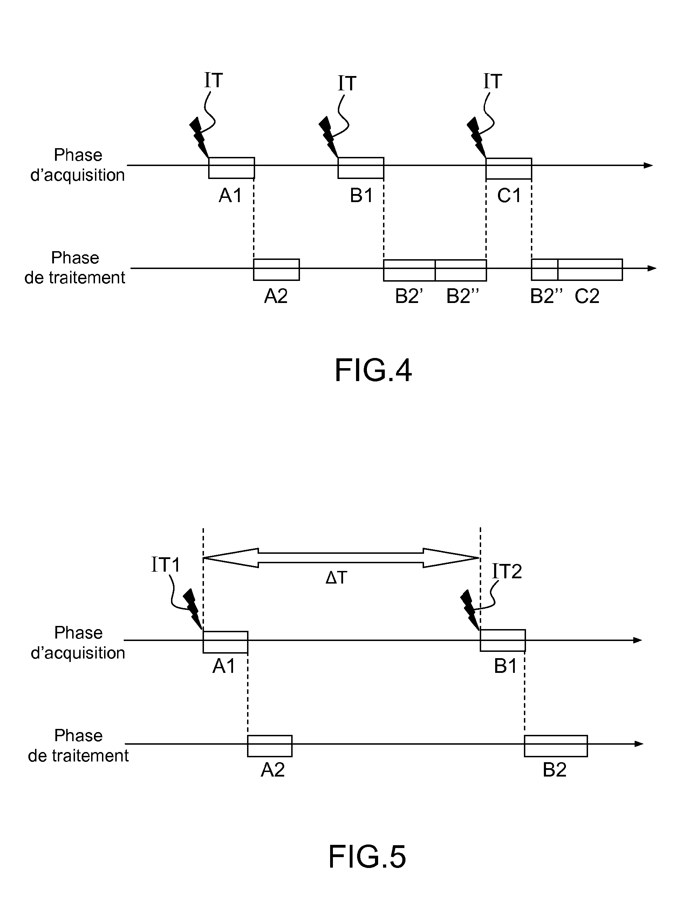

Ce principe est schématiquement décrit à la figure 4. Suite à une première interruption IT_1, une phase d'acquisition A1 suivie d'une phase de traitement des données A2 sont enchainées. Suite à une deuxième interruption IT_2, une phase d'acquisition B1 est suivie de plusieurs sous-phases de traitement B2' et B2". Enfin suite à la réception d'une troisième interruption IT_3 pendant l'exécution de la sous-phase de traitement B2", cette phase est interrompue pour exécuter une nouvelle phase d'acquisition C1, puis est reprise lorsque la phase d'acquisition C1 se termine. La phase de traitement C2 associée à la troisième interruption est exécutée consécutivement à la sous-phase de traitement B2".

Dans un mode particulier de réalisation de l'invention, il peut être utile de permettre le déclenchement d'une interruption à un instant donné dans le futur pour piloter un périphérique, par exemple pour changer à des instants précis la valeur d'un signal électrique de sortie d'un périphérique dans le but de contrôler l'asservissement de la vitesse variable d'une route dentée. Si le matériel utilisé ne permet pas le déclenchement d'une injection matériellement, une solution logicielle nécessite de pouvoir déclencher une interruption à un instant donné précis afin de basculer l'état d'un signal permettant de donner l'ordre au matériel de modifier l'état d'un signal électronique utilisé pour le pilotage de la roue dentée. La figure 5 illustre sur un diagramme un tel scénario. Pour respecter un besoin spécifique à une application donnée, une seconde interruption IT2 doit être générée un délai de temps Δt après la réception d'une première interruption IT1. La première interruption IT1 peut être une interruption source d'un domaine d'horloge ou une interruption hors domaine d'horloge. La spécification du comportement temporel d'une interruption source prévoit le besoin d'un nombre donné de répétitions d'un motif d'interruptions, c'est-à-dire le déclenchement d'interruptions selon un motif périodique tous les intervalles de temps Δt.

Pour respecter cette spécification, le procédé selon l'invention peut mettre en oeuvre différentes solutions connues de l'Homme du métier pour déclencher une interruption dans le futur, par exemple en utilisant une horloge qui offre la capacité à générer une interruption lorsque la valeur courante de son compteur est égale à une valeur spécifiée ou en utilisant une horloge supplémentaire à l'horloge de base.

Dans une dernière étape 310, l'interruption reçue est acquittée. L'acquittement d'une interruption indique la fin d'une phase d'acquisition lorsque l'interruption reçue est indépendante d'un domaine d'horloge ou la fin de la gestion de l'interruption lorsqu'il s'agit d'une interruption source d'un domaine d'horloge.

### Traitements effectués lors de la terminaison d'une tâche

Lorsque l'exécution d'une tâche est terminée, la prochaine activation de cette tâche est calculée. Le calcul est réalisé en nombre d'occurrences de l'horloge de base ou d'une horloge dérivée de l'horloge de base du domaine d'horloge associé à la tâche considérée. Ce nombre d'occurrences est déduit des contraintes temporelles spécifiées au préalable, par exemple dans un graphe d'exécution de cette tâche. La tâche est ensuite retirée de la liste des tâches en cours d'exécution pour être ajoutée à la liste des tâches au repos du domaine d'horloge.

### Exemple de mise en oeuvre du procédé selon l'invention

Le procédé selon l'invention s'applique pour tout système fonctionnant selon différents référentiels temporels et nécessitant réactivité forte sur leur instant d'exécution.

Un exemple d'un tel système est un système combinant des tâches dont le cadencement temporel est décrit sur la base d'un référentiel de temps physique avec des tâches dont le cadencement temporel est décrit sur la base d'un référentiel temporel associé à l'occurrence d'interruptions particulières générées, par exemple, par un périphérique communiquant avec le système et/ou observant des évènements particuliers externes au système. Ces tâches doivent par ailleurs s'échanger des données et également exécuter chacune des traitements à des instants particulier par rapport à leur référentiel temporel. Enfin, lorsque les interruptions ne surviennent plus, un comportement temporel et fonctionnel alternatif des tâches liées normalement à ce référentiel est spécifié sur la base du référentiel temporel en temps physique. L'architecture matérielle du système mettant en oeuvre le procédé selon l'invention offre préférentiellement deux coeurs d'exécution.

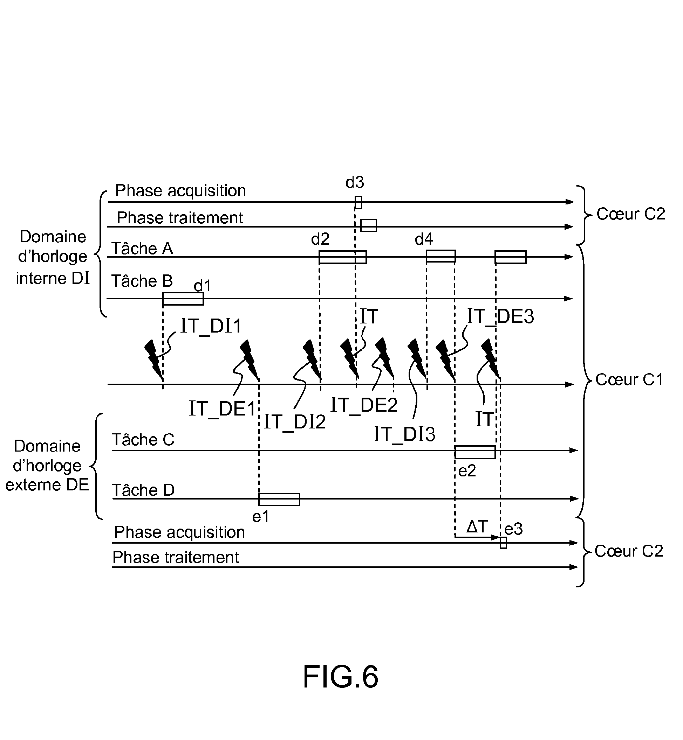

La figure 6 illustre, sur plusieurs chronogrammes, le cadencement temporel d'exécution de deux tâches A et B cadencées dans un premier domaine d'horloge physique DI et de deux tâches C et D cadencées dans un second domaine d'horloge externe DE.

A l'instant d1, une première interruption source IT_DI1 du domaine d'horloge physique DI déclenche l'exécution d'une instance de la tâche B. A l'instant e1, une première interruption source IT_DE1 du domaine d'horloge externe DE déclenche l'exécution d'une instance de la tâche D. A l'instant d2, une deuxième interruption source IT_DI2 du domaine d'horloge physique DI déclenche l'exécution d'une instance de la tâche A. A l'instant d3, une interruption IT_X, indépendante des deux domaines d'horloge DI et DE survient provoquant une phase d'acquisition de cette interruption suivie d'une phase de traitement des données associées. Préférentiellement ces deux phases sont exécutées sur un coeur de traitement C2 différent du coeur de traitement C1 principal sur lequel sont exécutées les tâches cadencées à partir des interruptions sources des deux domaines d'horloge DI et DE. A l'instant d4, une troisième interruption IT_DI3 du domaine d'horloge physique DI déclenche l'exécution d'une instance de la tâche A. Cette instance est interrompue lorsqu'on survient une interruption IT_DE3 du domaine d'horloge externe DE qui déclenche l'exécution, à l'instant e2, d'une instance de la tâche C. La tâche C préempte la tâche A car son échéance est antérieure à celle de la tâche A. Lorsque l'exécution de la tâche C est terminée, la tâche A se termine à son tour. Enfin, à un instant e3, une interruption IT_Y indépendante des deux domaines d'horloges DI et DE est provoquée à un instant Δt à compter de la dernière interruption source IT_DE3 du domaine d'horloge DE. Cette interruption IT_Y est provoquée par le système pour changer l'état d'un signal électrique à un instant précis calculé à compter de l'occurrence d'une interruption source. Cette interruption IT_Y nécessite uniquement une phase d'acquisition, exécutée préférentiellement sur le second coeur C2 de traitement du système, et aucune phase de traitement de données.

### Communications entre tâches cadencées selon différents domaines d'horloges.

On décrit à présent une variante de réalisation de l'invention qui concerne la communication entre tâches cadencées selon différents domaines d'horloges.

La communication entre deux tâches se fait lorsqu'une première tâche consommatrice cherche à consulter des données générées par une seconde tâche productrice. Pour s'assurer que les données consultées par la tâche consommatrice sont cohérentes, il est nécessaire que la date de visibilité des données, c'est-à-dire la date à laquelle la tâche productrice rend visible ces données, soit inférieure ou égale à la date d'activation de la tâche consommatrice.

Lorsque la tâche consommatrice et la tâche productrice appartiennent à deux domaines d'horloges différents, le problème se pose du respect de la contrainte précitée. En effet, du fait des dérives potentielles entre les horloges des deux domaines d'horloges distincts, il est difficile de connaitre avec précision la date de visibilité de données produites par une tâche appartenant à un premier domaine d'horloge depuis un second domaine d'horloge dans lequel s'exécute la tâche consommatrice de ces données.

Afin de résoudre le problème technique précité, dans une variante de réalisation, le procédé selon l'invention permet d'assurer une communication cohérente entre deux tâches de domaines d'horloges différents. Pour s'assurer que la date de visibilité des données à consulter est toujours inférieure ou égale à la date d'activation de la tâche consommatrice de ces données, le procédé selon une variante de l'invention consiste à implémenter les étapes suivantes.

Dans une variante de réalisation de l'étape 308, lorsque la date d'activation d'une tâche consommatrice est atteinte par le compteur d'occurrences d'interruptions source du domaine d'horloge de cette tâche, les correspondances entre cette date d'activation et les heures courantes des autres domaines d'horloges sont stockées. On obtient ainsi la date d'activation de la tâche consommatrice convertie dans le domaine d'horloge de la tâche productrice des données à consulter. A partir de cette date convertie, on en déduit les données consultables qui sont celles dont la date de visibilité est inférieure ou égale à cette date d'activation convertie.

La conversion de la date d'activation dans un autre domaine d'horloge est réalisée en relevant la valeur du compteur d'occurrences d'interruption source de cet autre domaine d'horloge à l'instant d'occurrence de cette date d'activation.

Dans une autre variante de réalisation de l'invention, on réalise la synchronisation d'une tâche sur un évènement cadencé selon un domaine d'horloge différent. Pour cela, une tâche signale qu'elle souhaite attendre un évènement pour continuer son exécution, puis lorsque cet évènement survient, cette tâche poursuit son exécution éventuellement dans un autre domaine d'horloge.

Pour réaliser cette synchronisation, une tâche doit signifier qu'elle souhaite se synchroniser sur un évènement via un appel système au noyau en fournissant au minimum l'évènement attendu et éventuellement un intervalle de tolérance sur l'instant d'occurrence de l'évènement (comme décrit dans l'étape préalable du procédé) ainsi que la description du comportement temporel attendu dans le cas ou un changement de domaine d'horloge est souhaité. Le traitement de l'appel système par le noyau consiste à vérifier si l'évènement n'a pas déjà eu lieu. Si l'évènement a déjà eu lieu, la tâche poursuit son exécution au sein de son domaine d'horloge. Sinon, la tâche attend l'occurrence de l'évènement. Ces étapes constituent des étapes préalables spécifiques à cette variante du procédé décrit auparavant. Pour implémenter l'attente de l'occurrence de l'évènement spécifié, plusieurs implémentations sont possibles.

Par exemple, l'utilisation d'une technique dite de polling au niveau système, bien connue de l'Homme du métier, peut être utilisée pour permettre de mutualiser la surveillance de conditions issues de plusieurs tâches. Par ailleurs, avec cette technique, une tâche n'est chargée que si l'évènement spécifié sur lequel la tâche doit se synchroniser a eu lieu.

Une autre implémentation possible consiste à utiliser une interruption spécifique pour informer le système que l'évènement attendu par la tâche a eu lieu. Dans cette implémentation, les quatre premières étapes du procédé décrit précédemment à l'appui de la figure 3 sont exécutées. Les troisième et quatrième étapes 304,305 étant optionnelles et exécutées uniquement si un intervalle de tolérance sur l'instant d'occurrence de l'évènement attendu a été spécifié lors de l'appel système préalable. La cinquième étape 306 d'appel à une fonction applicative n'est pas exécutée. Le procédé selon l'invention se poursuit par l'exécution d'une septième étape 308 de mise à jour des listes d'ordonnancement, en plaçant la tâche dans la file des tâches au repos d'un domaine d'horloge pour être exécutée à partir du prochain instant de l'horloge.

Indépendamment de l'implémentation choisie, lorsque la tâche est réveillée, elle peut poursuivre son exécution au sein de son domaine d'horloge ou basculer sur un comportement temporel décrit sur la base d'un autre domaine d'horloge, spécifié lors de l'appel système dans l'étape préalable à cette variante du procédé.

La nature de l'évènement initiateur de synchronisation d'une tâche et l'exécution de la tâche consécutive de cet évènement peuvent couvrir différents scénarios.

Par exemple, l'évènement peut être une condition sur les valeurs d'un périphérique d'entrée. Suivant la condition et les possibilités offertes par le matériel, il est possible de réaliser différentes synchronisations.

L'évènement considéré peut être une interruption générée lorsqu'une nouvelle valeur communiquée par le périphérique d'entrée est disponible. Dans ce cas, la tâche est synchronisée sur cet évènement en fonction de la valeur reçue.

Le procédé de gestion d'interruptions au sein d'une approche cadencée par plusieurs domaines de temps peut être mis en oeuvre en tant que programme d'ordinateur comportant des instructions pour son exécution sur un processeur. Un tel programme d'ordinateur peut être enregistré sur un support d'enregistrement lisible par un processeur.

## Revendications

1. Procédé d'exécution, déterministe ou quasi-déterministe, d'une application au sein d'un système multitâches (101), **caractérisé en ce que** ladite application est composée d'au moins une tâche dont le cadencement temporel est spécifié dans un premier référentiel temporel asynchrone par rapport au temps physique, appelé premier domaine d'horloge externe, défini par une horloge de base synchrone avec des changements d'état d'un périphérique (105) dudit système (101), ledit procédé comportant au moins les étapes suivantes exécutées par ledit système à la réception (301) d'une occurrence d'une interruption :
- Contrôler (303) si l'interruption reçue est autorisée par le système (101),
- Horodater (304) l'interruption reçue,
- Vérifier (305) que l'instant d'occurrence de l'interruption est conforme aux contraintes d'occurrence spécifiées et si cela n'est pas le cas, en informer l'application,
- Si l'interruption reçue est synchrone avec l'horloge de base dudit premier domaine d'horloge externe, autrement dit s'il s'agit d'une interruption source du premier domaine d'horloge externe :
• Incrémenter un compteur d'occurrences des interruptions reçues, la valeur courante dudit compteur d'occurrences correspondant au temps courant dans le domaine d'horloge externe,
• Identifier (307) les tâches en cours d'exécution dont l'échéance est égale à la valeur courante du compteur d'occurrences des interruptions reçues, signifiant une violation d'échéance,
• Transférer (308) les tâches dont la date d'activation est égale à la valeur courante du compteur d'occurrences des interruptions reçues, de la liste des tâches au repos vers la liste des tâches prêtes pour une exécution sur ledit système (101),
- Si ledit système multitâches comporte au moins un traitement par interruptions et que l'interruption reçue est soit asynchrone avec l'horloge de base dudit premier domaine d'horloge externe, soit asynchrone avec les interruptions source d'un domaine d'horloge physique, sur réception de ladite interruption asynchrone, marquer (309) la phase de traitement de l'interruption reçue comme exécutable et rendre visibles les données nécessaires pour ladite application au sein dudit premier domaine d'horloge externe,
- Acquitter (310) l'interruption reçue et autoriser la réception de nouvelles interruptions

2. Procédé de gestion d'interruptions selon la revendication 1 dans lequel les contraintes spécifiées sur l'occurrence de l'interruption sont : un instant attendu, en temps physique, d'occurrence de l'interruption et un intervalle de tolérance sur cet instant.

3. Procédé de gestion d'interruptions selon la revendication 2 dans lequel l'intervalle de tolérance est fixe ou est fonction d'une variable dont la sémantique est liée à l'application.

4. Procédé de gestion d'interruptions selon l'une des revendications précédentes dans lequel l'étape (305) de vérification des contraintes spécifiées sur l'occurrence d'une interruption source du domaine d'horloge comporte au moins les sous-étapes suivantes :
- Vérifier que l'interruption n'est pas reçue avant la borne inférieure de l'intervalle de tolérance,
- Vérifier qu'une interruption est reçue après la borne inférieure de l'intervalle de tolérance et avant la borne supérieure de l'intervalle de tolérance.

5. Procédé de gestion d'interruptions selon l'une des revendications précédentes comportant en outre une étape d'extraction des données (306) fournies par un périphérique dont un changement d'état a déclenché l'interruption.

6. Procédé de gestion d'interruptions selon l'une des revendications précédentes dans lequel les contraintes spécifiées sur l'occurrence de l'interruption sont un nombre d'interruptions autorisées sur un intervalle temporel de durée donnée.

7. Procédé de gestion d'interruptions selon l'une des revendications précédentes comportant en outre l'étape suivante : lorsqu'une tâche consommatrice cadencée selon un premier domaine d'horloge souhaite consulter des données produites par une tâche productrice cadencée selon un second domaine d'horloge distinct du premier domaine d'horloge, convertir la date d'activation de ladite tâche consommatrice dans le second domaine d'horloge de la tâche productrice, de sorte à en déduire les données consultables par la tâche consommatrice qui sont celles dont la date de visibilité est inférieure ou égale à cette date d'activation convertie.

8. Procédé de gestion d'interruptions selon l'une des revendications précédentes comportant en outre une étape de synchronisation d'une tâche sur un évènement cadencé selon un deuxième domaine d'horloge différent dudit premier domaine d'horloge externe, l'étape de synchronisation consistant au moins à :
- Signaler que la tâche souhaite attendre l'occurrence dudit évènement pour poursuivre son exécution,
- Lorsque cet évènement survient, poursuivre l'exécution de la tâche soit au sein dudit premier domaine d'horloge externe, soit en changeant le cadencement de cette tâche dudit premier domaine d'horloge externe vers ledit deuxième domaine d'horloge.

9. Programme d'ordinateur comportant des instructions pour l'exécution du procédé de gestion d'interruptions selon l'une quelconque des revendications 1 à 8, lorsque le programme est exécuté par un processeur.

10. Support d'enregistrement lisible par un processeur sur lequel est enregistré un programme comportant des instructions pour l'exécution du procédé de gestion d'interruptions selon l'une quelconque des revendications 1 à 8.

## Patentansprüche

1. Verfahren zum deterministischen oder quasi-deterministischen Ausführen einer Anwendung in einem Multitasking-System (101), **dadurch gekennzeichnet, dass** die Anwendung aus wenigstens einer Aufgabe besteht, deren Taktung in einer ersten, relativ zur physischen Zeit asynchronen Taktreferenz vorgegeben ist, externe Taktdomäne genannt, definiert durch einen synchronen Basistakt mit Zustandsänderungen eines Peripheriegeräts (105) des Systems (101), wobei das Verfahren wenigstens die folgenden Schritte beinhaltet, ausgeführt durch das System nach dem Empfang (301) des Auftretens einer Unterbrechung:
- Kontrollieren (303), ob die empfangene Unterbrechung durch das System (101) autorisiert ist;
- Zeitstempeln (304) der empfangenen Unterbrechung;
- Prüfen (305), ob der Zeitpunkt des Auftretens der Unterbrechung den vorgegebenen Auftretensbeschränkungen entspricht, und Benachrichtigen der Anwendung, wenn dies nicht der Fall ist;
- wenn die empfangene Unterbrechung mit dem Basistakt der ersten externen Taktdomäne synchron ist, mit anderen Worten, wenn es sich um eine Ursprungsunterbrechung der ersten externen Taktdomäne handelt:
• Inkrementieren eines Zählers von Auftretensfällen von empfangenen Unterbrechungen, wobei der aktuelle Wert des Zählers von Auftretensfällen der aktuellen Zeit in der externen Taktdomäne entspricht;
• Identifizieren (307) der aktuell ausgeführten Aufgaben, deren Termin gleich dem aktuellen Wert des Zählers von Auftretensfällen von empfangenen Unterbrechungen ist, was eine Terminverletzung bedeutet;
• Übertragen (308) der Aufgaben, für die das Aktivierungsdatum gleich dem aktuellen Wert des Zählers von Auftretensfällen von empfangenen Unterbrechungen ist, aus der Liste von Aufgaben im Ruhezustand in die Liste von für die Ausführung auf dem System (101) bereiten Aufgaben;
- Markieren (309), wenn das Multitasking-System wenigstens eine Verarbeitung pro Unterbrechung umfasst und die empfangene Unterbrechung entweder mit dem Basistakt der ersten externen Taktdomäne asynchron oder mit den Ursprungsunterbrechungen einer physischen Taktdomäne synchron ist, beim Empfang der asynchronen Unterbrechung, der Phase der Verarbeitung der empfangenen Unterbrechung als ausführbar, und Sichtbarmachen der für die Anwendung benötigten Daten innerhalb der ersten externen Taktdomäne;
- Quittieren (310) der empfangenen Unterbrechung und Autorisierten des Empfangs neuer Unterbrechungen.

2. Verfahren zum Verwalten von Unterbrechungen nach Anspruch 1, wobei die über das Auftreten der Unterbrechung vorgegebenen Beschränkungen wie folgt lauten: ein erwarteter Zeitpunkt, in physischer Zeit, des Auftretens der Unterbrechung und ein Toleranzintervall zu diesem Zeitpunkt.

3. Verfahren zum Verwalten von Unterbrechungen nach Anspruch 2, wobei das Toleranzintervall fest oder von einer Variablen abhängig ist, deren Semantik mit der Anwendung assoziiert ist.

4. Verfahren zum Verwalten von Unterbrechungen nach einem der vorherigen Ansprüche, wobei der Schritt (305) des Prüfens spezifischer Beschränkungen über das Auftreten einer Ursprungsunterbrechung der Taktdomäne wenigstens die folgenden Teilschritte beinhaltet:
- Prüfen, ob die Unterbrechung nicht vor der unteren Grenze des Toleranzintervalls empfangen wird;
- Prüfen, ob eine Unterbrechung nach der unteren Grenze des Toleranzintervalls und vor der oberen Grenze des Toleranzintervalls empfangen wird.

5. Verfahren zum Verwalten von Unterbrechungen nach einem der vorherigen Ansprüche, das ferner einen Schritt (306) des Extrahierens von von einem Peripheriegerät zugeführten Daten beinhaltet, von dem eine Zustandsänderung die Unterbrechung ausgelöst hat.

6. Verfahren zum Verwalten von Unterbrechungen nach einem der vorherigen Ansprüche, wobei die über das Auftreten der Unterbrechung vorgegebenen Beschränkungen eine Anzahl von Unterbrechungen ist, die in einem Zeitintervall einer vorbestimmten Dauer autorisiert sind.

7. Verfahren zum Verwalten von Unterbrechungen nach einem der vorherigen Ansprüche, das ferner die folgenden Schritte beinhaltet: Umwandeln, wenn eine Verbrauchsaufgabe, getaktet gemäß einer ersten Taktdomäne, Daten einholen will, die von einer Produktionsaufgabe erzeugt werden, getaktet gemäß einer zweiten, von der ersten Taktdomäne verschiedenen Taktdomäne, des Aktivierungsdatums der Verbrauchsaufgabe in der zweite Taktdomäne der Produktionsaufgabe, um davon die Daten abzuleiten, die von der Verbrauchsaufgabe eingeholt werden können, wobei diese Daten die Daten sind, für die das Sichtbarkeitsdatum gleich oder geringer ist als dieses umgewandelte Aktivierungsdatum.

8. Verfahren zum Verwalten von Unterbrechungen nach einem der vorherigen Ansprüche, das ferner einen Schritt des Synchronisierens einer Aufgabe an einem Ereignis beinhaltet, das gemäß einer sich von der ersten externen Taktdomäne unterscheidenden zweiten Taktdomäne getaktet wird, wobei der Synchronisierungsschutt wenigstens Folgendes beinhaltet:
- Signalisieren, dass die Aufgabe auf das Auftreten des Ereignisses warten möchte, um seine Ausführung fortzusetzen;
- Fortsetzen, wenn dieses Ereignis eintritt, der Ausführung der Aufgabe entweder innerhalb der ersten externen Taktdomäne oder durch Ändern der Taktung dieser Aufgabe der ersten externen Taktdomäne auf die zweite Taktdomäne.

9. Computerprogramm, das Befehle zum Ausführen des Verfahrens zum Verwalten von Unterbrechungen nach einem der Ansprüche 1 bis 8 umfasst, wenn das Programm von einem Prozessor abgearbeitet wird.

10. Prozessorlesbares Speichermedium, auf dem ein Programm gespeichert ist, das Befehle zum Ausführen des Verfahrens zum Verwalten von Unterbrechungen nach einem der Ansprüche 1 bis 8 umfasst.

## Claims

1. A method for the deterministic or quasi-deterministic execution of an application within a multitasking system (101), **characterised in that** said application is made up of at least one task, the timing of which is specified in a first timing reference, called first external clock domain, that is asynchronous relative to the physical time and is defined by a synchronous basic clock with changes of state of a peripheral device (105) of said system (101), said method comprising at least the following steps executed by said system upon receipt (301) of an occurrence of an interruption:
- checking (303) whether the received interruption is authorised by said system (101);
- time-stamping (304) the received interruption;
- verifying (305) that the instant of occurrence of the interruption complies with the specified occurrence constraints and notifying the application if this is not the case;
- if the received interruption is synchronous with the basic clock of said first external clock domain, in other words if it is a source interruption of said first external clock domain:
• incrementing a counter of occurrences of the received interruptions, with the current value of said counter of occurrences corresponding to the current time in said external clock domain;
• identifying (307) the tasks that are currently being executed, for which the deadline is equal to the current value of the counter of occurrences of the received interruptions, signifying a violation of the deadline;
• transferring (308) the tasks, for which the activation date is equal to the current value of the counter of occurrences of the received interruptions, from the list of tasks in an idle state to the list of tasks ready to be executed on said system (101);
- marking (309), if said multitasking system comprises at least one process per interruption and the received interruption is either asynchronous with the basic clock of said first external clock domain or is asynchronous with the source interruptions of a physical clock domain, upon receipt of said asynchronous interruption, the phase for processing the received interruption as being executable and making the data needed for said application visible within said first external clock domain;
- acknowledging (310) the received interruption and authorising the receipt of new interruptions.

2. The method for managing interruptions according to claim 1, wherein the constraints specified on the occurrence of the interruption are as follows: an expected instant, in physical time, of occurrence of the interruption and a tolerance interval on this instant.

3. The method for managing interruptions according to claim 2, wherein said tolerance interval is fixed or is a function of a variable, the semantic of which is associated with the application.

4. The method for managing interruptions according to any one of the preceding claims, wherein said step (305) of verifying specific constraints on the occurrence of a source interruption of the clock domain comprises at least the following sub-steps:
- verifying that the interruption is not received before the lower limit of said tolerance internal;
- verifying that an interruption is received after the lower limit of said tolerance interval and before the upper limit of said tolerance interval.

5. The method for managing interruptions according to any one of the preceding claims, further comprising a step (306) of extracting data supplied by a peripheral device, for which a change of state has triggered the interruption.

6. The method for managing interruptions according to any one of the preceding claims, wherein the constraints specified on the occurrence of the interruption are a number of authorised interruptions on a time interval with a determined duration.

7. The method for managing interruptions according to any one of the preceding claims, further comprising the following steps: converting, when a consuming task that is timed according to a first clock domain wishes to consult data produced by a producing task timed according to a second clock domain distinct from said first clock domain, the date of activation of said consuming task into said second clock domain of said production task, so as to deduce therefrom the data that can be consulted by said consuming task, which data is the data for which the date of visibility is less than or equal to this converted activation date.

8. The method for managing interruptions according to any one of the preceding claims, further comprising a step of synchronising a task on an event timed according to a second clock domain different from said first external clock domain, said synchronisation step at least comprising:
- signalling that the task wishes to wait for the occurrence of said event in order to continue its execution;
- continuing, when this event occurs, the execution of the task either within said first external clock domain or by switching the timing of this task of said first external clock domain to said second clock domain.

9. A computer program comprising instructions for executing the method for managing interruptions according to any one of claims 1 to 8, when said programme is executed by a processor.

10. A processor-readable storage medium which stores a program comprising instructions for executing the method for managing interruptions according to any one of claims 1 to 8.
